(19) Europäisches Patentamt
European Patent Office
Office européen des brevets

(11) **EP 2 597 515 B1**

(12) **EUROPEAN PATENT SPECIFICATION**

(45) Date of publication and mention
of the grant of the patent:
**02.01.2019 Bulletin 2019/01**

(51) Int Cl.:
*G02F 1/1333* (2006.01)  *G02B 1/11* (2015.01)
*G02B 17/08* (2006.01)  *G03B 21/20* (2006.01)
*G03B 21/28* (2006.01)  *G03B 33/08* (2006.01)
*G02B 27/00* (2006.01)  *G03B 21/00* (2006.01)

(21) Application number: **12191120.0**

(22) Date of filing: **02.11.2012**

(54) **Image displaying apparatus**

Bildanzeigevorrichtung

Appareil d'affichage d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2011 JP 2011241504**

(43) Date of publication of application:
**29.05.2013 Bulletin 2013/22**

(73) Proprietor: **Ricoh Company, Ltd.**
**Tokyo 143-8555 (JP)**

(72) Inventors:
• **Osaka, Takanobu**
  **Ohta-ku, Tokyo 143-8555 (JP)**
• **Tatsuno, Hibiki**
  **Ohta-ku, Tokyo 143-8555 (JP)**
• **Shibayama, Yasuyuki**
  **Ohta-ku, Tokyo 143-8555 (JP)**
• **Nishina, Kiichiro**
  **Ohta-ku, Tokyo 143-8555 (JP)**
• **Hirakawa, Makoto**
  **Ohta-ku, Tokyo 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**EP-A1- 1 806 612        EP-A1- 2 560 393**
**EP-A2- 2 034 724        EP-A2- 2 103 980**
**EP-A2- 2 587 310        JP-A- 2004 177 801**
**US-A1- 2004 070 738     US-A1- 2009 168 031**

**Description**

BACKGROUND OF THE INVENTION

1. Field of the Invention

An aspect of the present invention may relate to an image displaying apparatus.

2. Description of the Related Art

An image displaying apparatus is known which is capable of displaying an enlarged and projected image even when its placement nearer a surface to be projected onto is attained as compared with a conventional and traditional image displaying apparatus. Such an image displaying apparatus is called a "short-distance projector". The objectives of a short-distance projector are as follows. The first one is to prevent projection light from entering the eyes of a presenter (such as a lecturer or a speaker) standing near a screen which is causing a glare and the second one is to not cause an influence of exhaust air or noise from a projector to distract an audience listening to a presentation of a presenter.

There are plural types of a projection optical system included in a short-distance projector. For example, there are a type for increasing an angle of view of a conventional (coaxial/rotationally symmetric) projection optical system to reduce the distance from a screen surface and a type using a curved mirror. It is possible for a type for increasing an angle of view of a projection optical system to realize a short-distance projection as an extension of a conventional technique. However, it is necessary to increase an outer diameter of a lens near a screen, and hence, the full length of a projector is large.

Meanwhile, it is possible for a type using a curved mirror to miniaturize a projection optical system and to realize projection at a shorter distance. For an example of a type using a curved mirror, there is an invention described in Japanese Patent No. 4329863 or Japanese Patent No. 3727543. An invention described in Japanese Patent No. 4329863 is a type arranging a concave mirror behind a lens optical system to conduct projection. An invention described in Japanese Patent No. 3727543 is a type arranging a convex mirror behind a lens optical system to conduct projection. It is possible for either of the types to conduct settings by merely arranging a lens(es) and a mirror(s) in order, and hence, it is possible to increase the precision of arrangement of components. However, it is necessary to increase the distance between a lens optical system and a mirror, and hence, the projection optical system is large.

For a type using a curved mirror capable of reducing a distance between a lens and a mirror, there is an invention described in Japanese Patent Application Publication No. 2009-157223 or Japanese Patent Application Publication No. 2009-145672. In inventions described in Japanese Patent Application Publication No. 2009-157223 and Japanese Patent Application Publication No. 2009-145672, a long optical path between a lens optical system and a mirror is folded by arranging a folding mirror to attain miniaturization of an optical system.

In an invention described in Japanese Patent Application Publication No. 2009-157223, a concave mirror and a convex mirror are arranged in a consecutive order next to a lens optical system. Furthermore, in an invention described in Japanese Patent Application Publication No. 2009-145672, a plane mirror is arranged behind a concave mirror. In any of the optical systems described in Japanese Patent Application Publication No. 2009-157223 and Japanese Patent Application Publication No. 2009-145672, a distance from an image displaying element to a curved mirror is long. Accordingly, when a distance from a screen to a projector body is reduced further than a conventional one, the length of the body of an optical system causes a problem due to lack of space.

For solving such a problem in regard to a "a size of an optical system itself", there is an invention described in Japanese Patent No. 4210314. In Japanese Patent No. 4210314, a projection optical system is described wherein a screen surface and a display surface of an image displaying element are perpendicular to each other. When such a vertical type is employed, the length of a projection optical system itself does not cause a problem due to lack of space even if a distance between a screen and a projector body is reduced.

However, when a projection lens is provided to be parallel to a screen like a projection optical system described in Japanese Patent No. 4210314, it is easier for contaminant to adhere to a projection lens or a mirror as compared with a projection optical system in a horizontal type projector wherein the projection optical system is perpendicular to a screen. Furthermore, adhered contaminant is generally provided in a condition to fall onto a vertical type projection optical system, and hence, is not naturally removed by a gravitational force, wherein leaving thereof causes a condition that the contaminant is reflected on a screen surface.

For a countermeasure against such contaminant, a projection type image displaying apparatus is known wherein a dust-proof cover is placed on a projection lens (for example, see Japanese Patent No. 4467609). A projection type image displaying apparatus described in Japanese Patent No. 4467609 includes a screen on a body provided perpendicularly to the floor, wherein each of a projection lens, a reflection mirror, and a protecting cover is arranged in a direction perpendicular to the body. Hence, these members are arranged parallel to floor. Furthermore, a display surface of an optical modulation element is perpendicular to a surface for placing a protecting cover, and hence, an object of the protecting cover provided in Japanese Patent No. 4467609 is to prevent a user from contacting a reflection mirror to change an angle thereof, etc.

Japanese Patent No. 4467609 describes that it is preferable to conduct optical designing of a projection optical system depending on a kind of an optically transparent member to be used for a protecting cover, but does not mention an illuminance distribution on a screen. Furthermore, in an image displaying apparatus including a vertical type projection optical system as illustrated in Japanese Patent No. 4210314, an invention for solving an irregularity in an illuminance distribution on a screen has not known.

EP 1 806 612 A1 describes a projection optical system that is appropriate for maintaining high resolution with low distortion, miniaturizing a reflector, decreasing the number of reflectors, and decreasing the depth and the bottom (or top) of a display used for a rear projection television, for example. The projection optical system according to the invention enlarges and projects images from a primary image surface existing at a reducing side to a secondary image surface existing at an enlarging side. The projection optical system has a first optical system and a second optical system. The first optical system forms an intermediate image (position II) of the primary image surface. The second optical system has a concave reflector that forms the secondary image surface resulting from the intermediate image. A light beam travels from the center of the primary image surface and to the center of the secondary image surface and crosses an optical axis. The light beam is reflected on the concave reflector, crosses the optical axis again, and reaches the secondary image surface.

US-2009/168031 A1 describes an oblique projection optical system which enlarges an image formed on a display device surface, and obliquely projects the enlarged image on a screen surface. The oblique projection optical system has, in the order from a reduction side: a refraction optical portion having a positive optical power, a concave reflection surface having a positive optical power, and a convex reflection surface having a negative optical power. The refraction optical portion includes a rotationally symmetric coaxial refraction group. An intermediate image of the image formed on the display device surface is formed between the refraction optical portion and the concave reflection surface. An aperture stop image is formed between the concave reflection surface and the convex reflection surface. The concave reflection surface and the convex reflection surface fulfill prescribed conditional formulae.

EP 2 560 393 A1 is a European patent application pursuant to Article 54(3) EPC and describes an image displaying apparatus including a light source, a light condenser for condensing light emitted from the light source to form a condensed light image at a predetermined position, a light mixing element having an entrance end near the condensed light image, a reflective image displaying element having plural micro-mirrors arranged two-dimensionally and configured to change an inclination angle of an individual micro-mirror between an on-state and an off-state so that emission of reflected light turns on or off, an illumination optical system including a condenser lens and a mirror for illumination arranged between an exit end of the light mixing element and the reflective image displaying element, and a projection optical system for projecting, onto a surface to be projected, reflected light from a micro-mirror being at an on-state among plural micro-mirrors constituting the reflective image displaying element, wherein the mirror for illumination is arranged at a position nearest the reflective image displaying element on an optical path from the light mixing element to the reflective image displaying element and a reflection surface of this mirror for illumination is positioned at a side of the reflective image displaying element with respect to a projection lens system constituting a part of the projection optical system.

EP 2 587 310 A2 is a European patent application pursuant to Article 54(3) EPC and describes a projection optical system that is used for an image display device having an image display element, includes a refractive optical system that includes a plurality of lenses; an aperture that limits a quantity of light led to the refractive optical system from the image display element; a lens group that is arranged between the image display element and the aperture, has a positive refractive power, and has low field curvature with respect to the image display element; and a mirror optical system that has a concave mirror arranged on an opposite side from the image display element across the refractive optical system, the aperture, and the lens group.

SUMMARY OF THE INVENTION

The invention is defined by the subject-matter of independent claim 1. The dependent claims are directed to advantageous embodiments.

ADVANTAGES OF THE INVENTION

Advantageously, there is provided an image displaying apparatus including an illumination optical system, an image displaying element configured to be illuminated by the illumination optical system, a projection optical system configured to project light from the image displaying element onto a screen, and a dust-proof member provided between the screen and the projection optical system, wherein the projection optical system includes a projection lens composed of plural lenses and a mirror configured to reflect reflection light emitted through the projection lens toward the screen, and wherein the dust-proof member is configured to mitigate an irregularity in an illuminance distribution of reflection light to be projected onto the screen.

Advantageously, there is provided an image displaying apparatus including an illumination optical system, an image displaying element configured to be illuminated by the illumination optical system, a projection optical system configured to project light from the image displaying element onto a screen, and a dust-proof member provided between the screen and the projection optical system, wherein the projection optical system includes a projection lens composed of plural lenses and a mirror configured to reflect light emitted from the image displaying element through the projection lens toward the screen, and wherein the dust-proof member includes an anti-reflection coating with a transmittance of 98% or greater at an incident angle of 45 degrees and a transmittance of 80% or greater at an incident angle of 70 degrees.

BRIEF DESCRIPTION OF THE DRAWINGS

FIG. 1 is a side view illustrating an example of an essential part of an image displaying apparatus according to an embodiment of the present invention when viewed from one direction.

FIG. 2 is a contour diagram illustrating an example of an illuminance distribution on a reflection type image displaying element included in the image displaying apparatus.

FIG. 3 is a contour diagram illustrating an example of an illuminance distribution of projection light projected onto a screen by the image displaying apparatus.

FIG. 4 is a side view illustrating an example of a relation between an incident angle of projection light on a dust-proof glass included in the image displaying apparatus and a position of projection onto a screen.

FIG. 5 is an elevation view illustrating an example of a relation between an incident angle of projection light on a dust-proof glass included in the image displaying apparatus and a position of projection onto a screen.

FIG. 6 is a graph illustrating an example of a correlation between a transmittance of and an incident angle on a dust-proof glass included in the image displaying apparatus.

FIG. 7 is a contour diagram illustrating an example of a transmittance distribution on a dust-proof glass included in the image displaying apparatus.

FIG. 8A and FIG. 8B are a contour diagram illustrating an example of an illuminance distribution on an image displaying element included in the image displaying apparatus and a contour diagram illustrating an example of a transmittance diagram on a dust-proof glass therein, respectively.

FIG. 9 is a contour diagram illustrating an example of an illuminance distribution on a screen provided by multiplying an illuminance distribution on an image displaying element and a transmittance distribution on a dust-proof glass included in the image displaying apparatus.

FIG. 10A and FIG. 10B are a contour diagram in a case where an anti-reflection coating is not included, which illustrates an example of a transmittance distribution on a dust-proof glass in the image displaying apparatus, and a contour diagram in a case where an anti-reflection coating is included, respectively.

FIG. 11A and FIG. 11B are an elevation view and side view which illustrate an example of a color wheel included in the image displaying apparatus, respectively.

FIG. 12 is a perspective view illustrating an example of an illumination homogenizing element included in the image displaying apparatus.

FIG. 13A, FIG. 13B, FIG. 13C, and FIG. 13D are a plan view, partially enlarged view, side view, and projection light reflection condition diagram, which illustrate an example of a reflection type image displaying element included in the image displaying apparatus, respectively.

FIG. 14A and FIG. 14B are an elevation view and side view, which illustrate an example of a light source and lamp reflector included in the image displaying apparatus, respectively.

FIG. 15 is a schematic diagram illustrating an example of an illumination optical system included in the image displaying apparatus.

FIG. 16 is an elevation view for illustrating an example of an outline of a second illumination mirror included in the image displaying apparatus.

DETAILED DESCRIPTION OF THE PREFERRED EMBODIMENTS

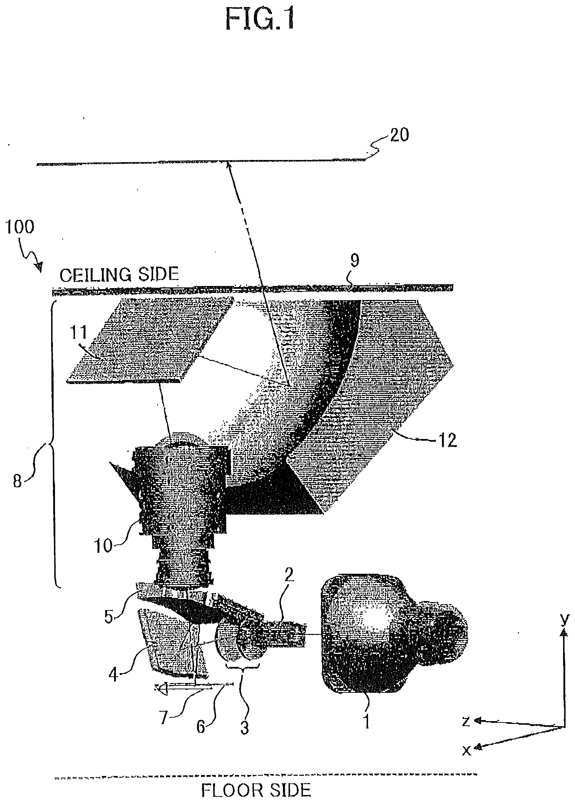

An example(s) of an image displaying apparatus according to an embodiment of the present invention will be described by using drawings below. FIG. 1 is a side view illustrating an example of a configuration of an illumination optical system and projection optical system included in a projector 100 which is a practical example of an image displaying apparatus according to an embodiment of the present invention. In FIG. 1, one direction in a horizontal plane, one direction orthogonal thereto in a horizontal plane, and an axis orthogonal to both the x-axis and the z-axis in a vertical direction are an x-axis, a z-axis, and a y-axis, respectively. A light source 1 includes, inside thereof, a luminous body composed of a xenon lamp, a mercury lamp, or a metal halide lamp, etc. Illumination light emitted from the luminous body is condensed at a predetermined position by a light condensing mirror (condenser) which is a lamp reflector provided inside the luminous body. A lamp cover (explosion-proof cover) which is not illustrated in the figure is attached to a front end of the light source 1.

In FIG. 1, a light mixing element 2 which is an illumination homogenizing element is arranged on a light path of illumination light emitted from the light source 1, wherein an entrance end of the light mixing element 2 is positioned near a position of a focal point for the illumination light. For the light mixing element 2, a well-known light tunnel having a rectangular aperture is used in the present practical example. Such a light tunnel is provided by using and combining four plate-shaped mirrors with an inside reflection surface so as to form a quadrangular pipe. There is a position of a focal point for the illumination light near one end of a light tunnel, whereby the illumination light enters the light tunnel. Reflection of such incident light is repeated by inside surfaces of the four mirrors and illumination light with a homogenized illuminance distribution and a rectangular cross-section is emitted from an exit end at the other end of the light tunnel. For the light mixing element 2, a publicly-known rod integrator, light pipe, etc., other than a light tunnel, may be used.

On a route of illumination light emitted from the light mixing element 2, a condenser lens 3 composed of plural relay lenses, a first mirror for illumination 4, and a second mirror for illumination 5 are arranged in order. The condenser lens 3 and the first mirror for illumination 4 are provided on a generally straight route of illumination light emitted from the light mixing element 2. The first mirror for illumination 4 is a cylindrical mirror and is placed with an obliquely upward orientation inclined with respect to both a direction of the x-axis and a direction of the z-axis so that illumination light emitted from the light mixing element 2 is folded and reflected toward an obliquely upward direction. The second mirror for illumination 5 is a concave mirror and is placed with an obliquely downward orientation inclined with respect to both a direction of the x-axis and a direction of the z-axis so that reflection light from the first mirror for illumination 4 is folded and reflected downward toward a DMD 7 which is a reflection type image displaying element placed downward.

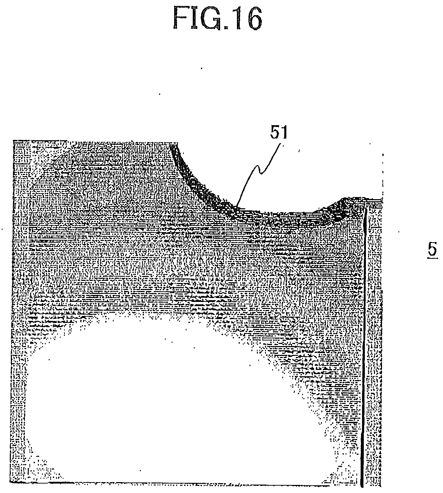

The second mirror for illumination 5 has a notch 51 as illustrated in FIG. 16. Thereby, a lens barrel 10 at a side of the DMD 7 does not mechanically overlap therewith. An optical system from the light source 1 to the second mirror for illumination 5 constitutes an illumination optical system for illuminating the DMD 7.

Thus, illumination light transmits through the condenser lens 3 and is reflected by the first mirror for illumination 4 and the second mirror for illumination 5 in order, whereby a shape of a cross-section of illumination light is shaped and illumination light reflected from the second mirror for illumination 5 illuminates the DMD 7. A cover glass 6 is arranged on a front face of the DMD 7. The DMD 7 is arranged generally along a horizontal plane (an xz-plane), wherein illumination light emitted through the second mirror for illumination 5 is reflected upward in a vertical direction when a micro-mirror included in the DMD 7 is turned on. An exit end of the light mixing element 2 and an under-mentioned micro-mirror surface of the DMD 7 are provided at conjugate positions with respect to an illumination optical system composed of the condenser lens 3, the first mirror for illumination 4, and the second mirror for illumination 5, wherein homogenized illumination light at an exit end of the light mixing element 2 illuminates a micro-mirror surface of the DMD 7 homogeneously.

As described above, illumination light is three-dimensionally reflected several times while traveling from the condenser lens 3 through the first mirror for illumination 4, the second mirror for illumination 5, and the DMD 7 to a projection optical system 8. Then, in order for each member described above not to interfere with illumination light, the first mirror for illumination 4 and the second mirror for illumination 5 are inclined with respect to directions of the x-axis and y-axis and centered at and arranged around an optical axis of the projection optical system 8 when viewed from a direction on a plane.

Additionally, a DMD 7 which is a reflection type image displaying element is used as an example of an image displaying element in a practical exampled described below. However, in an image displaying apparatus according to an embodiment of the present invention, an image displaying element is not limited to a DMD and another image displaying element, for example, a liquid crystal panel, may be used.

In FIG. 1, the projection optical system 8 is composed of a projection lens system held inside a lens barrel 10 and a projection mirror, wherein the projection mirror is composed of a first projection mirror 11 and a second projection mirror 12. The projection lens system is composed of plural lenses from a lens at an entrance end to a lens at an exit end. A dust-proof glass 9 is arranged parallel to a plane including the x-axis and z-axis in the vicinity of the upper ends of the first projection mirror 11 and second projection mirror 12. The projector 100 according to the present practical example is incorporated into a housing which is not illustrated in the figure, wherein the dust-proof glass 9 is embedded to an aperture at an upper end of the housing, that is, between the projection optical system 8 and a screen 20 which is a surface to be projected onto, with the intension of dust-proofing an inside of the image displaying apparatus.

As illustrated in FIG. 1, the xz-plane is a plane parallel to a floor surface and the DMD 7 is placed parallel to the floor surface. The dust-proof glass 9 is also placed parallel to the floor surface. Accordingly, an image displaying surface of the DMD 7 is parallel to the dust-proof glass 9. The dust-proof glass 9 is placed parallel to the floor surface thereby being placed stably. For the dust-proof glass 9, it is desirable to use a parallel plate glass in view of an incident angle control, fabrication and processing, and cost thereof.

Furthermore, the dust-proof glass 9 is placed on a top of the projection optical system 8 as illustrated in FIG. 1. Such a position contacts an exterior, and hence, it is highly possible to contact another object. If the dust-proof glass 9 is broken by contact, a dust-proof function is not attained, and further, it is possible to damage the second projection mirror 12, the first projection mirror 11, or a lens, which are arranged inside the projector 100. Accordingly, it is desirable for the dust-proof glass 9 not to be just a simple plate glass but to be a hardened glass. Furthermore, it is desirable for a thickness of the dust-proof glass 9 (plate thickness) to be 3 mm or greater.

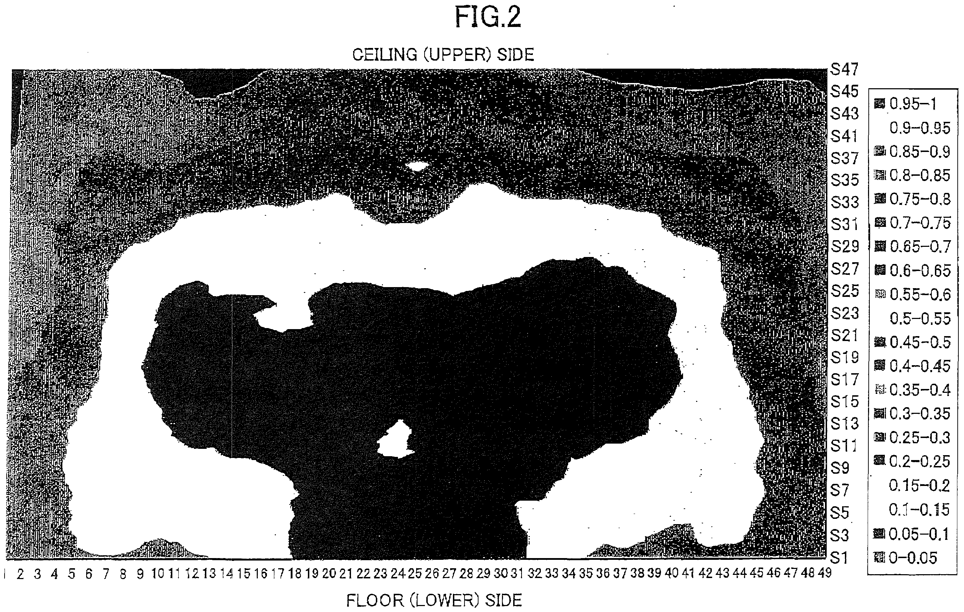

Herein, FIG. 2 illustrates an example of an illuminance distribution provided in a case where all micro-mirrors of the DMD 7 used in the above-mentioned configuration are at an ON-state. In an illuminance distribution along a long side at a lower side among two long sides in FIG. 2, an illuminance near a center is particularly high. As compared therewith, an illuminance distribution along an upper long side generally has low portions more than in the illuminance distribution along a lower long side. That is, there is provided a condition that a lower long side on the DMD 7 is illuminated more brightly than an upper long side thereon. An illuminance distribution on the DMD 7 is determined by a light orientation distribution of the light source 1, a shape and size of an aperture of the light mixing element 2, surface shapes of the condenser lens 3, first mirror for illumination 4 and second mirror for illumination 5, and steric arrangement of such optical components.

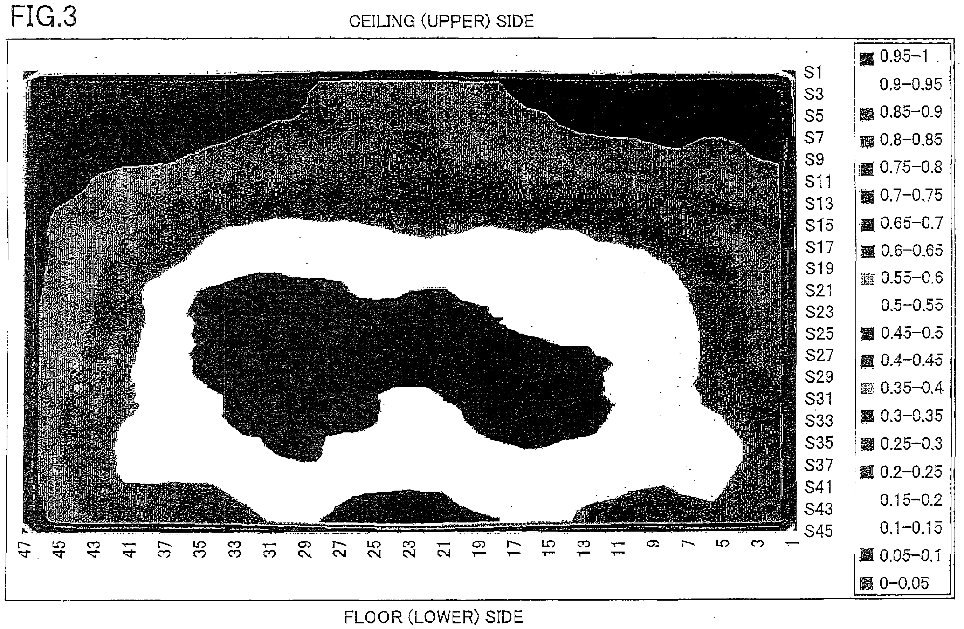

When an illuminance distribution on the DMD 7 is on a condition as illustrated in FIG. 2 and when image projection light according to the above-mentioned illuminance distribution is projected through the projection optical system 8 onto a screen which is a surface to be projected onto and not illustrated in the figure, upward and downward directions are reversed with respect to those in the illuminance distribution illustrated in FIG. 2 so that an image at a side of a lower side of the screen is bright whereas an image at an upper side of the screen is relatively dark. FIG. 3 illustrates an example of an illuminance distribution in a case where a diagonal size of an image to be projected and displayed is 2.032 m (80 inches).

In FIG.3, an illuminance distribution on a screen is somewhat changed by an influence of the projection optical system 8 as compared with the illuminance distribution on the DMD 7 (see FIG. 2). In FIG. 3, a central portion of an illuminance distribution on the screen corresponds to a central portion of an image to be projected. As illustrated in FIG. 3, an area with a high illuminance (a bright area) is concentrated on a central portion of an image. Furthermore, a floor (lower) side of an image has an extended bright portion as compared with a ceiling (upper) side. On the other hand, left and right end portions at a ceiling side are dark. Thus, an illuminance distribution on the screen is also heterogeneous by correlating to heterogeneity of an illuminance distribution on the DMD 7. If an illuminance distribution on an identical screen is heterogeneous, an irregularity occurs in the brightness of an image to be projected and the image quality is not preferable.

As illustrated in FIG. 1, light (projection light) reflected from the DMD 7 is incident on the projection optical system 8, transmits through a projection lens, is folded by the first projection mirror 11, reflected by the second projection mirror 12 which is a free-form mirror, passes through the dust-proof glass 9, and arrives at the screen. Incident angles of projection light reflected from the second projection mirror 12, which is incident on the dust-proof glass 9, are various angles.

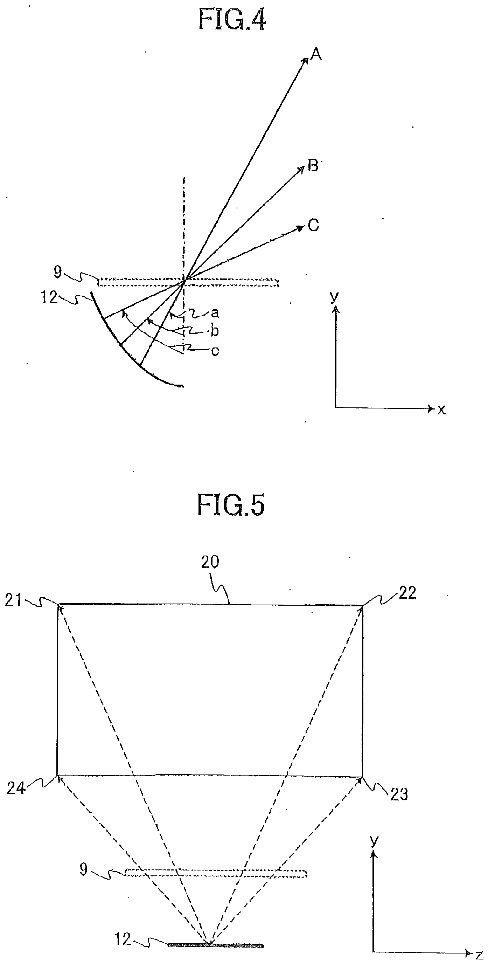

Herein, an example of a relation between an incident angle on the dust-proof glass 9 and a position of arrival of light on the screen will be described by using FIG. 4. FIG. 4 is an example of a side view in which the second projection mirror 12 constituting the projection optical system 8 and projection light reflected from the second projection mirror 12 and directed toward a screen 20 are viewed from a direction of the z-axis. In FIG. 4, symbols A, B, and C indicate examples of a position of arrival of projection light on the screen 20. Position A, Position B, and Position C are an upper side of the screen 20, a center of the screen 20, and a lower side of the screen 20, respectively.

As illustrated in FIG. 4, when an incident angle of projection light reflected from the second projection mirror 12 and arriving at position A with respect to the dust-proof glass 9, similarly, an incident angle of projection light arriving at position B with respect to the dust-proof glass 9, and an incident angle of projection light arriving at position C with respect to the dust-proof glass 9 are a, b, and c, respectively, an incident angle of projection light arriving at position C at a lower side (floor side) of the screen 20 with respect to the dust-proof glass 9 is large while an incident angle a of projection light arriving at position A at an upper side (ceiling side) of the screen with respect to the dust-proof glass 9 is small. While a transmittance of projection light with a large incident angle is small, a transmittance of projection light with a small incident angle is high. That is, a transmittance of projection light arriving at position A is high while a transmittance of projection light arriving at position C is low.

Next, an example of projection light arriving at four corners on the screen 20 and an incident angle thereof with respect to the dust-proof glass 9 will be described by using FIG. 5. In FIG. 5, the screen 20 is indicated by a horizontally long rectangle, whose four corners are provided with reference numerals 21, 22, 23, and 24 in clockwise order from upper left.

Incident angles of projection light reflected from the second projection mirror 12 and arriving at position 21 and projection light reflected from the second projection mirror 12 and arriving at position 22 with respect to the dust-proof glass 9 are, for example, 36.5°. Also, Incident angles of projection light reflected from the second projection mirror 12 and arriving at position 23 and projection light reflected from the second projection mirror 12 and arriving at position 24 with respect to the dust-proof glass 9 are, for example, 80.2°.

Thus, an incident angle of projection light with respect to the dust-proof glass 9 is different depending on a position of arrival on the screen 20. That is, an incident angle of projection light for an upper side of the screen 20 with respect to the dust-proof glass 9 is small while an incident angle of projection light for a lower side of the screen 20 with respect to the dust-proof glass 9 is large.

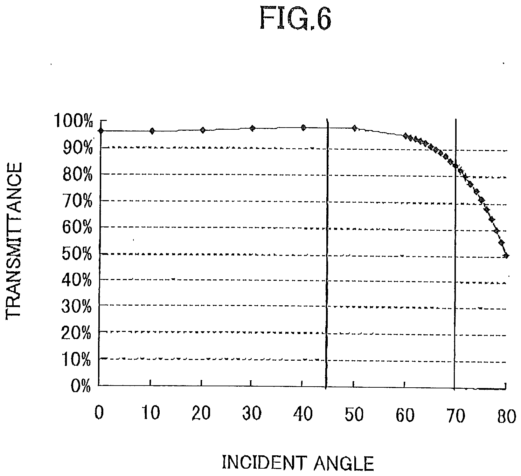

Next, a relation between a transmittance of and the incident angle for the dust-proof glass will be described by using FIG. 6. FIG. 6 is a graph illustrating a relationship between an incident angle for and a transmittance of the dust-proof glass 9 having an anti-reflection coating, wherein a transverse axis and a longitudinal axis indicate an incident angle (degree(s)) and a transmittance (%), respectively. As illustrated in FIG. 6, when an incident angle is greater than 50 degrees, a subsequent transmittance indicates a tendency of rapid decrease.

In FIG. 6, a transmittance at an incident angle of 45 degrees is about 98% and a transmittance at an incident angle of 70 degrees is about 84%. If a transmittance is less than such a numerical value, an effect of mitigating an irregularity in an illuminance distribution on the screen due to the dust-proof glass 9 is reduced. Hence, a desirable relationship between an incident angle and a transmittance, to mitigate an irregularity in an illuminance distribution on the screen 20 by using the dust-proof glass 9 having an anti-reflection coating, is that a transmittance at an incident angle of 45 degrees is 98% or greater and a transmittance at an incident angle of 70 degrees is 80% or greater.

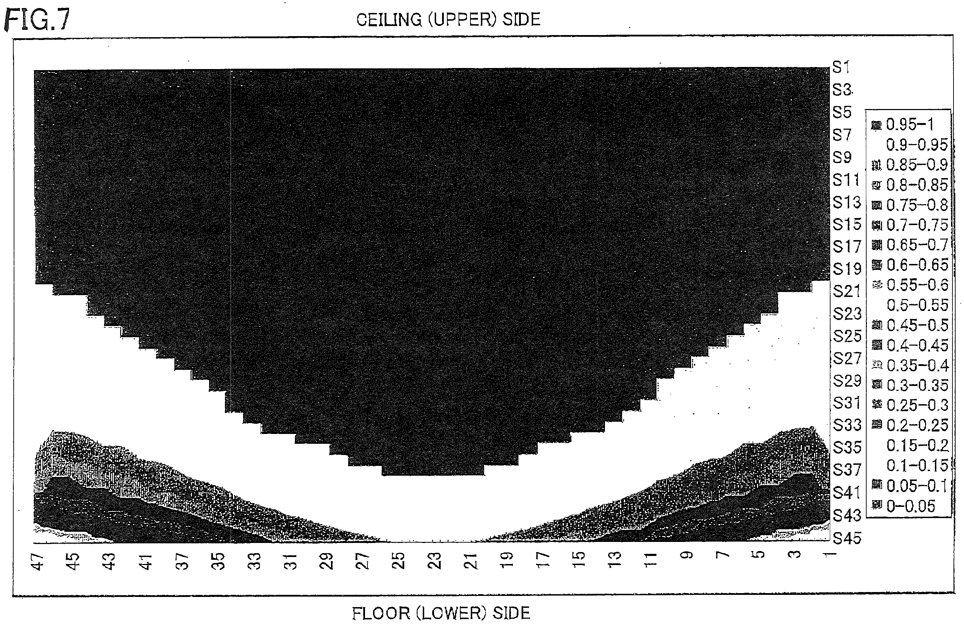

A transmittance of the dust-proof glass 9 being different depending on a position of arrival of projection light on the screen 20 which light has been reflected from the second projection mirror 12 is that an illuminance distribution of projection light is changed by transmitting through the dust-proof glass 9. Herein, a relationship between a position of incidence on the dust-proof glass 9, that is, a position of projection onto the screen 20 and a transmittance of the dust-proof glass 9 will be described by using FIG. 7.

FIG. 7 is a contour diagram illustrating an example of a transmittance distribution at each position on an image displaying area of the DMD 7 or a rectangular projection image projected onto the screen 20. Such a diagram is referred to as a transmittance distribution diagram and a distribution as illustrated in FIG. 7 is referred to as a transmittance distribution. Additionally, an aspect ratio of the screen 20 is 10:16.

As illustrated in FIG. 7, a portion with a high transmittance extends from a center to both upper end portions of the image displaying area. Furthermore, transmittances at both lower end portions of the image displaying area are low. Additionally, although a borderline of transmittance in FIG. 7 is coarse, this is caused by a coarse mesh, and in fact, a smooth distribution is provided.

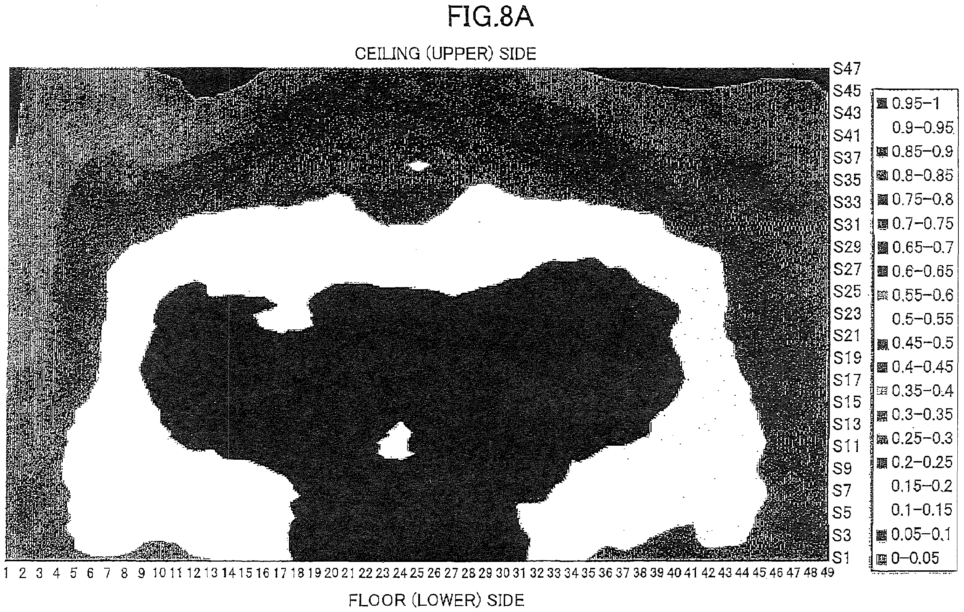

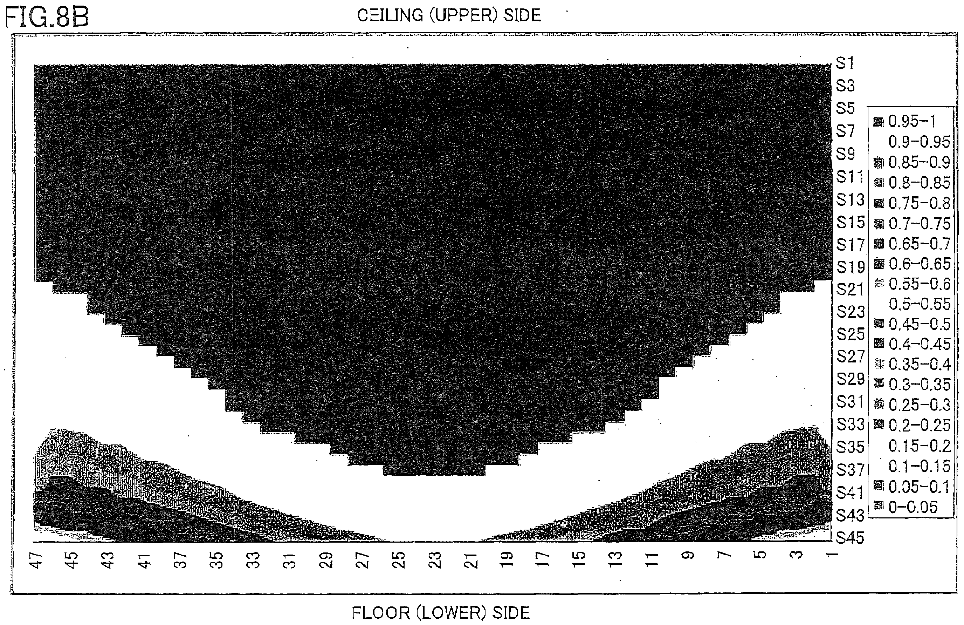

Next, mitigation of an irregularity (unevenness) in an illuminance distribution on the screen 20 due to the dust-proof glass 9 will be described by using FIG. 8A, FIG. 8B, FIG. 9, FIG. 10A, and FIG. 10B. First, FIG, 8A is a contour diagram identical to the example of an illuminance distribution on the DMD 7 illustrated in FIG. 2. FIG. 8B is a contour diagram identical to the example of a transmittance distribution on the dust-proof glass 9 illustrated in FIG. 7. As illustrated in FIG. 8A, there is a bright irregularity at a lower side in an illuminance distribution on the DMD 7. Furthermore, as illustrated in FIG. 8B, an area with a high transmittance extends from a center to both upper ends of a transmittance distribution on the dust-proof glass 9.

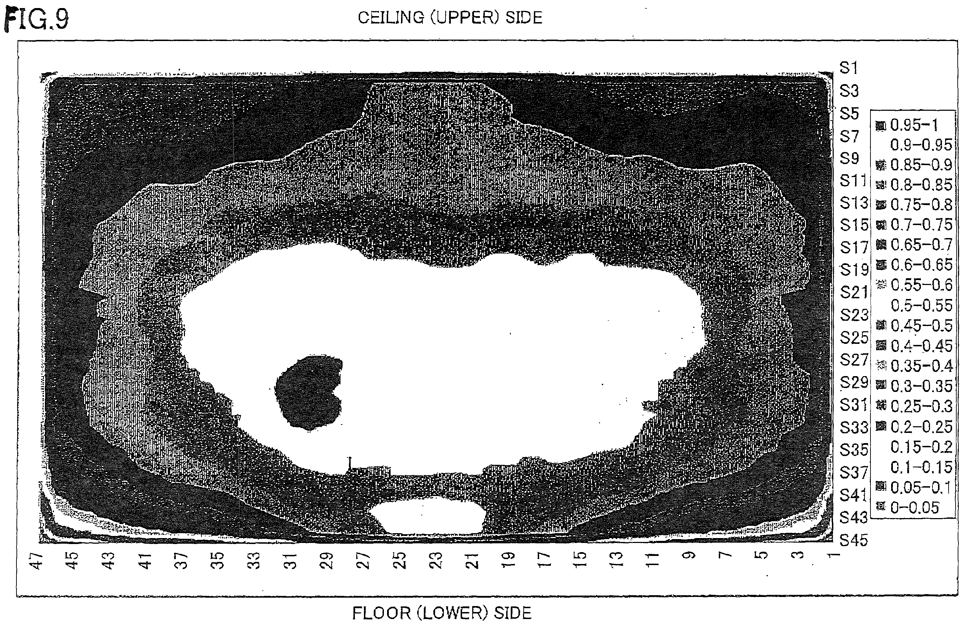

It is possible to cancel an irregularity (unevenness) in an illuminance distribution on the screen 20 by multiplying an illuminance distribution on the DMD 7 as illustrated in FIG. 8A with a transmittance distribution on the dust-proof glass 9 as illustrated in FIG. 8B. FIG. 9 is a contour diagram illustrating an example of an illuminance distribution on the screen 20 obtained as a result of multiplying an illuminance distribution on the DMD 7 with a transmittance distribution on the dust-proof glass 9. As illustrated in FIG. 9, "an irregularity in an illuminance" in which an area with a high illuminance (bright area) extends on a central portion at a lower side of the screen 20 is mitigated as compared with the illuminance distribution on the DMD 7 (see FIG. 2), and areas with a similar degree of illuminance are distributed approximately concentrically from near a center to a periphery of the screen 20.

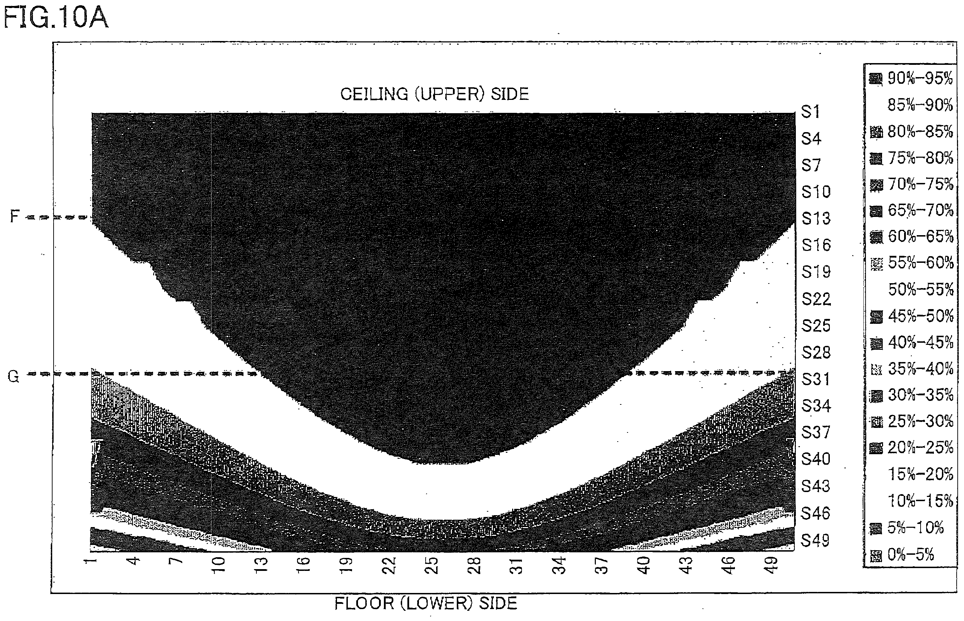

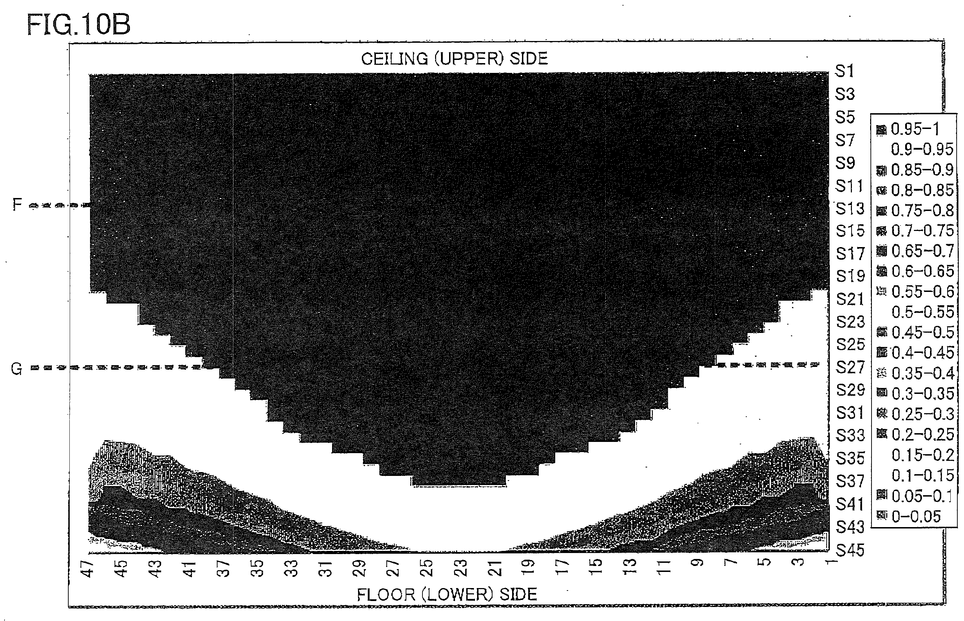

Next, an example of a transmittance distribution in a case where an anti-reflection coating is provided on the dust-proof glass 9 will be described. FIG. 10A is a contour diagram illustrating an example of a transmittance distribution in a case where an anti-reflection coating is not provided on the dust-proof glass 9. FIG. 10B is a contour diagram illustrating an example of a transmittance distribution in a case where an anti-reflection coating is provided on the dust-proof glass 9. When attention is paid to an area near a center interposed by line segments indicated by symbols F and G in FIG. 10A and FIG. 10B, areas with a high transmittance at both ends of a lower edge (at a side of a lower side on the screen) are wider in a transmittance distribution in a case where an anti-reflection coating is provided, as compared with a transmittance distribution in a case where an anti-reflection coating is not provided.

Thus, when the dust-proof glass 9 provided with no anti-reflection coating is used, an illuminance distribution on the screen 20 is not preferable because both ends of a lower edge of the screen are darker. When the dust-proof glass 9 provided with an anti-reflection coating is used, it is possible to mitigate an irregularity in an illuminance distribution on the screen more appropriately.

Additionally, contour diagrams illustrating illuminance distributions in FIG. 2, FIG. 3, and FIG. 9 were obtained by a simulation experiment using ray tracing calculation software.

As described above, due to an image displaying apparatus according to an embodiment of the present invention, it is possible to prevent contaminant from entering an inside of the apparatus and adhering to an optical element by providing a dust-proof glass, whereby it is possible to prevent image quality degradation caused by reflecting such contaminant on an image projected onto a screen.

Furthermore, a dust-proof glass with a transmittance distribution forming a distribution opposite to an illuminance distribution on an image displaying element is provided, whereby it is possible to prevent image quality degradation caused by an irregularity in an illuminance distribution on an image projected onto a screen, which irregularity is readily caused in an image displaying apparatus capable of projecting an image at a short distance, for example, an irregularity in an illuminance distribution wherein a center of an image is bright and gradually darker toward a periphery (in particular, four corners).

Herein, a specification of optical components included in the projector 100 according to the above-mentioned practical example will be illustrated by Table 1 through Table 5. Table 1 and Table 2 illustrate coordinates of a position of each optical component from the light source 1 to the DMD 7, and a specification of components of each optical system, respectively. In Table 1 and Table 2, a "light tunnel" refers to the light mixing element 2. Furthermore, a "first relay lens" and "second relay lens", a "first folding mirror", and a "second folding mirror" refer to a first lens and second lens constituting the condenser lens 3, the first mirror for illumination 4, and the second mirror for illumination 5, respectively.

(Tale 1)

| Coordinates of arrangement of illumination system components | | |
|---|---|---|
| Light tunnel | x (mm) | -5.481 |
| | y (mm) | 22.88 |
| | z (mm) | -34.528 |
| | γ (deg.) | 9.75 |
| First relay lens | x (mm) | -7.191 |
| | y (mm) | 21.16 |
| | z (mm) | -31.839 |
| Second relay lens | x (mm) | -7.191 |
| | y (mm) | 21.16 |
| | z (mm) | -17.743 |
| First folding mirror | x (mm) | -11.48 |
| | y (mm) | 17 |
| | z (mm) | 20.366 |
| | α (deg.) | -36.03 |
| | β (deg.) | -2.03 |
| | γ (deg.) | 18 |
| Second folding mirror | x (mm) | -15.191 |
| | y (mm) | 36.16 |
| | z (mm) | 11.556 |
| | α (deg.) | 94.2 |
| | β (deg.) | 17.8 |
| | γ (deg.) | 0 |

(continued)

| Coordinates of arrangement of illumination system components | | |
|---|---|---|
| DMD (center) | x (mm) | 0 |
| | y (mm) | 0 |
| | z (mm) | 0 |

(Table 2)

| Details of illumination system components | | |
|---|---|---|
| Light tunnel | Rectangular aperture (mm) | 5.7 × 3.54 |
| | Total length (mm) | 25 |
| First relay lens | Radius of curvature R1 (mm) | 36.05 |
| | Radius of curvature R2 (mm) | -10.00 |
| | R2: Aspheric coefficient C04 | 1.81956E-05 |
| | R2: Aspheric coefficient C06 | 2.54925E-06 |
| | R2: Aspheric coefficient C08 | -2.42823E-09 |
| | R2: Aspheric coefficient C10 | -1.45189E-10 |
| | R2: Aspheric coefficient C12 | 1.54226E-13 |
| | R2: Aspheric coefficient C14 | 4.34653E-14 |
| | Central thickness (mm) | 6.3 |
| | Refractive index nd | 1.51473 |
| | Abbe number vd | 63.83 |
| Second relay lens | Radius of curvature RI (mm) | 209.10 |
| | Radius of curvature R2 (mm) | -13.84 |
| | R2: Aspheric coefficient C04 | -1.2428306E-05 |
| | R2: Aspheric coefficient C06 | 5.2759745E-08 |
| | R2: Aspheric coefficient C08 | -1.1041945E-10 |
| | R2: Aspheric coefficient C10 | 1.4179450E-11 |
| | R2: Aspheric coefficient C12 | 3.2988440E-13 |
| | R2: Aspheric coefficient C14 | 7.7405353E-15 |
| | Central thickness (mm) | 5.0 |
| | Refractive index nd | 1.51473 |
| | Abbe number vd | 63.83 |
| First folding mirror | Radius of curvature Rx (mm) | -475 |
| | Radius of curvature Ry (mm) | ∞ |
| Second folding mirror | Radius of curvature R (mm) | -78 |

Table 3 illustrates coordinates of arrangement of optical components of a projection optical system in a case where a size of an image to be projected onto the screen 20 is 43 inches. Table 4 to Table 6 illustrate a specification of optical components constituting a projection optical system 10. In Table 3 to Table 6, a "folding mirror" and a "free-form mirror" refer to the first projection mirror 11 and the second projection mirror 12, respectively.

(Table 3)

| Coordinates of arrangement of a projection system | | |
|---|---|---:|
| Lens 1 | x (mm) | 6.34 |
| | y (mm) | 44.16 |
| | z (mm) | 0 |
| Lens 2 | x (mm) | 6.34 |
| | y (mm) | 48.407 |
| | z (mm) | 0 |
| Lens 3 | x (mm) | 6.34 |
| | y (mm) | 50.357 |
| | z (mm) | 0 |
| Lens 4 | x (mm) | 6.34 |
| | y (mm) | 57.079 |
| | z (mm) | 0 |
| Lens 5 | x (mm) | 6.34 |
| | y (mm) | 65.525 |
| | z (mm) | 0 |
| Lens 6 | x (mm) | 6.34 |
| | y (mm) | 72.306 |
| | z (mm) | 0 |
| Lens 7 | x (mm) | 6.34 |
| | y (mm) | 81.382 |
| | z (mm) | 0 |
| Lens 8 | x (mm) | 6.34 |
| | y (mm) | 83.504 |
| | z (mm) | 0 |
| Lens 9 | x (mm) | 6.34 |
| | y (mm) | 89.882 |
| | z (mm) | 0 |
| Lens 10 | x (mm) | 6.34 |
| | y (mm) | 94.951 |
| | z (mm) | 0 |
| Lens 11 | x (mm) | 6.34 |
| | y (mm) | 104.863 |
| | z (mm) | 0 |

(continued)

| Coordinates of arrangement of a projection system | | |
|---|---|---|
| Folding mirror | x (mm) | 6.34 |
| | y (mm) | 170.569 |
| | z (mm) | 0 |
| | α (deg.) | -90 |
| | β (deg.) | 39.7 |
| | γ (deg.) | 90 |
| Free-form mirror | x (mm) | -48.66 |
| | y (mm) | 105.269 |
| | z (mm) | 0 |
| | α (deg.) | -90 |
| | β (deg.) | 39.7 |
| | γ (deg.) | 90 |
| Dust-proof glass (flat plate) | x (mm) | -48.66 |
| | y (mm) | 173.569 |
| | z (mm) | 0 |
| Screen | x (mm) | 136 |
| | y (mm) | 595 |
| | z (mm) | 0 |
| | α (deg.) | 0 |
| | β (deg.) | -90 |
| | γ (deg.) | 0 |

(Table 4)

| Details of lenses of a projection system | | |
|---|---|---|
| Lens 1 | Radius of curvature R1 (mm) | 19.964 |
| | R1: Aspheric coefficient C04 | 6.750330E-05 |
| | R1: Aspheric coefficient C06 | 2.106239E-07 |
| | R1: Aspheric coefficient C08 | 4.589B54E-09 |
| | R1: Aspheric coefficient C10 | -2.480613E-11 |
| | R1: Aspheric coefficient C12 | -1.914714E-13 |
| | R1: Aspheric coefficient C14 | 7.962944E-15 |
| | R1: Aspheric coefficient C16 | 9.765820E-16 |
| | Radius of curvature R2 (mm) | -194.535 |
| | R2: Aspheric coefficient C04 | 8.850207E-05 |
| | R2: Aspheric coefficient C06 | 2.599021E-07 |
| | R2: Aspheric coefficient C08 | 2.928829E-09 |
| | R2: Aspheric coefficient C10 | 3.664243E-11 |
| | R2: Aspheric coefficient C12 | -1.018063E-12 |
| | R2: Aspheric coefficient C14 | 1.012708E-14 |
| | R2: Aspheric coefficient C16 | 9.188785E-17. |
| | Central thickness (mm) | 4.02 |
| | nd | 1.5178 |
| | vd | 63.5 |
| Lens 2 | Radius of curvature R1 (mm) | 57.339 |
| | Radius of curvature R2 (mm) | 12.164 |
| | Central thickness (mm) | 1.95 |
| | nd | 1.8830 |
| | vd | 40.8 |
| Lens 3 | Radius of curvature R1 (mm) | 12.164 |
| | Radius of curvature R2 (mm) | -20.746 |
| | Central thickness (mm) | 6.39 |
| | nd | 1.4875 |
| | vd | 70.44 |
| Lens 4 | Radius of curvature R1 (mm) | -59.627 |
| | Radius of curvature R2 (mm) | 49.429 |
| | Central thickness (mm) | 7.84 |
| | nd | 1.7306 |
| | vd | 37.63 |

(continued)

| Details of lenses of a projection system | | |
|---|---|---|
| Lens 5 | Radius of curvature R1 (mm) | 19.401 |
| | Radius of curvature R2 (mm) | -16.196 |
| | Central thickness (mm) | 6.78 |
| | nd | 1.581 |
| | vd | 40.93 |

(Table 5)

| Lens 6 | Radius of curvature R1 (mm) | -16.106 |
|---|---|---|
| | Radius of curvature R2 (mm) | -29.570 |
| | Central thickness (mm) | 2.21 |
| | nd | 1.904 |
| | vd | 31.3 |
| Lens 7 | Radius of curvature R1 (mm) | -154.020 |
| | Radius of curvature R2 (mm) | 27.678 |
| | Central thickness (mm) | 1.82 |
| | Nd | 1.5022 |
| | vd | 68.83 |
| Lens 8 | Radius of curvature R1 (mm) | 16.284 |
| | Radius of curvature R2 (mm) | -53.869 |
| | Central thickness (mm) | 4.70 |
| | Nd | 1.7068 |
| | vd | 28.84 |
| Lens 9 | Radius of curvature R1 (mm) | -26.356 |
| | Radius of curvature R2 (mm) | 16.351 |
| | Central thickness (mm) | 1.80 |
| | Nd | 1.9040 |
| | vd | 31.3 |
| Lens 10 | Radius of curvature R1 (mm) | -20.191 |
| | R1: Aspheric coefficient C04 | 1.291913E-04 |
| | R1: Aspheric coefficient C06 | 2.804087E-06 |
| | R1: Aspheric | -1.168735E-07 |

(continued)

| | coefficient C08 | |
|---|---|---|
| | R1: Aspheric coefficient C10 | 2.477830E-09 |
| | R1: Aspheric coefficient C12 | -2.811971E-11 |
| | R1: Aspheric coefficient C14 | 1.571829E-13 |
| | R1: Aspheric coefficient C16 | -3.346058E-16 |
| | Radius of curvature R2 (mm) | -31.084 |
| | R2: Aspheric coefficient C04 | 8.3694240E-05 |
| | R2: Aspheric coefficient C06 | 2.8055440E-07 |
| | R2: Aspheric coefficient C08 | -1.6459440E-08 |
| | R2: Aspheric coefficient C10 | 2.0125550E-10 |
| | R2: Aspheric coefficient C12 | -6.3510430E-13 |
| | R2: Aspheric coefficient C14 | -5.5621870E-15 |
| | R2: Aspheric coefficient C16 | 1.4136190E-17 |
| | Central thickness (mm) | 1.80 |
| | nd | 1.5316 |
| | vd | 55.8 |

(Table 6)

| | | |
|---|---|---|
| Lens 11 | Radius of curvature RI (mm) | -16.010 |
| | R1: Aspheric coefficient C04 | 1.720445E-05 |
| | R1: Aspheric coefficient C06 | -1.048542E-06 |
| | R1: Aspheric coefficient C08 | 8.610665E-09 |
| | R1: Aspheric coefficient C10 | -1.738139E-11 |
| | R1: Aspheric coefficient C12 | -7.253682E-14 |
| | R1: Aspheric coefficient C14 | -2.849886E-17 |
| | R1: Aspheric coefficient C16 | 2.269214E-18 |
| | Radius of curvature R2 (mm) | -14.27 |
| | R2: Aspheric coefficient C04 | 2.595314E-05 |
| | R2: Aspheric coefficient C06 | -6.354212E-07 |
| | R2: Aspheric coefficient C08 | 1.020103E-08 |
| | R2: Aspheric coefficient C10 | -1.317664E-10 |
| | R2: Aspheric coefficient C12 | 1.166266E-12 |
| | R2: Aspheric coefficient C14 | -5.476703E-15 |
| | R2: Aspheric coefficient C16 | 1.077343E-17 |
| | Central thickness (mm) | 4.13 |
| | nd | 1.5318 |
| | vd | 55.8 |
| Folding mirror | Radius of curvature R (mm) | ∞ |

(continued)

| Dust-proof glass | Radius of curvature R (mm) | ∞ |
|---|---|---|
| | Central thickness (mm) | 1.5168 |
| | Nd | 64.2 |
| | vd | 64.2 |
| Stop 1 | Stop diameter (mm) | 15.6 |
| Stop 2 | Stop diameter (mm) | 14.8 |
| Stop 3 | Stop diameter (mm) | 18.2 |

Table 7 illustrates details of the second projection mirror 12 which is a free-form mirror constituting the projection optical system 10.

(Table'7)

| Details of a free-form mirror | | | |
|---|---|---|---|
| Radius of curvature R | ∞ | - | - |
| Aspheric coefficient C 2,0 | 5.861336E-03 | Aspheric coefficient C 8,3 | -2.407363E-18 |
| Aspheric coefficient C 0,2 | 2.299409E-03 | Aspheric coefficient C 6,5 | -9.526972E-19 |
| Aspheric coefficient C 2,1 | 3.447998E-05 | Aspheric coefficient C 4,7 | 3.675664E-18 |
| Aspheric coefficient C 0,3 | 3.902964E-06 | Aspheric coefficient C 2,9 | -5.348885E-18 |
| Aspheric coefficient C 4,0 | 2.031034E-07 | Aspheric coefficient C 0,11 | -8.796724E-19 |
| Aspheric coefficient C 2,2 | 4.709163E-07 | Aspheric coefficient C 12,0 | 1.280434E-20 |
| Aspheric coefficient C 0,4 | 7.126801E-08 | Aspheric coefficient C 10,2 | -3.018432E-20 |
| Aspheric coefficient C 4,1 | 4.007452E-07 | Aspheric coefficient C 8,4 | -2.294161E-20 |
| Aspheric coefficient C 2,3 | 5.067003E-09 | Aspheric coefficient C 6,6 | 1.615774E-19 |
| Aspheric coefficient C 0,5 | -1.490065E-09 | Aspheric coefficient C 4,8 | 2.693197E-21 |
| Aspheric coefficient C 6,0 | -1.195799E-10 | Aspheric coefficient C 2,10 | 9.864725E-20 |
| Aspheric coefficient C 4,2 | 1.211113E-11 | Aspheric coefficient C 0,12 | -8.337776E-21 |
| Aspheric coefficient C 2,4 | -8.261563E-11 | Aspheric coefficient C 12,1 | 1.485311E-22 |
| Aspheric coefficient C 0,6 | 1.615799E-10 | Aspheric coefficient C 10,3 | 1.098791E-21 |
| Aspheric coefficient C 6,1 | -4.124172E-10 | Aspheric coefficient C 8,5 | 5.367361E-22 |
| Aspheric coefficient C 4,3 | -1.810118E-12 | Aspheric coefficient C 6,7 | -3.052206E-21 |
| Aspheric coefficient C 2,5 | 3.618342E-12 | Aspheric coefficient C 4,9 | 1.632099E-21 |
| Aspheric coefficient C 0,7 | -3.75 9000E-12 | Aspheric coefficient C 2,11 | 2.499589E-22 |
| Aspheric coefficient C 8,0 | 1.030317E-13 | Aspheric coefficient C 0,13 | 4.076615E-22 |
| Aspheric coefficient C 6,2 | -3.644868E-14 | Aspheric coefficient C 14,0 | -1.423270E-24 |
| Aspheric coefficient C 4,4 | 1.388509E-13 | Aspheric coefficient C 12,2 | 5.605448E-24 |
| Aspheric coefficient C 2,6 | -2.148588E-14 | Aspheric coefficient C 10, 4 | 4.172579E-24 |
| Aspheric coefficient C 0,8 | -4.698124E-14 | Aspheric coefficient C 8,6 | -2.701329E-23 |
| Aspheric coefficient C 8,1 | 3.085129E-15 | Aspheric coefficient C 6,8 | 1.125883E-24 |
| Aspheric coefficient C 6,3 | 2.856688E-15 | Aspheric coefficient C 4,10 | -4.987119E-23 |
| Aspheric coefficient C 4,5 | -1.090944E-15 | Aspheric coefficient C 2,12 | -1.758726E-23 |

(continued)

| Details of a free-form mirror | | | |
|---|---|---|---|
| Aspheric coefficient C 2,7 | 3.429217E-15 | Aspheric coefficient C 0,14 | -3.613684E-24 |
| Aspheric coefficient C 0,9 | 2.390548E-15 | Aspheric coefficient C 14,1 | -4.066279E-27 |
| Aspheric coefficient C 10,0 | -4.894122E-17 | Aspheric coefficient C 12,3 | -1.931199E-25 |
| Aspheric coefficient C 8,2 | 5.872508E-17 | Aspheric coefficient C 10,5 | 3.002305E-27 |
| Aspheric coefficient C 6,4 | -1.117660E-17 | Aspheric coefficient C 8,7 | 3.511542E-25 |
| Aspheric coefficient C 4,6 | -2.254950E-16 | Aspheric coefficient C 6,9 | 1.893875E-25 |
| Aspheric coefficient C 2,8 | 5.642092E-18 | Aspheric coefficient C 4,11 | 3.499850E-25 |
| Aspheric coefficient C 0,10 | 1.647124E-17 | Aspheric coefficient C 2,13 | 1.054943E-25 |
| Aspheric coefficient C 10,1 | -1.051485E-18 | Aspheric coefficient C 0,15 | 8.602497E-27 |

A shape of an aspheric lens illustrated in Table 4 to Table 6 is defined by Formula 1.

(Formula 1)

$$z(x,y) = \frac{cr^2}{1 + (1 - c^2 r^2)^{1/2}} + \sum c_{2k} r_k^{2k}$$

wherein $c = 1/R$ and $r = (x^2 + y^2)^{1/2}$.

A shape of a free-form mirror illustrated in Table 7, is defined by Formula 2.

(Formula 2)

$$z(x,y) = \frac{cr^2}{1 + (1 - c^2 r^2)^{1/2}} + \sum_{k,j} c_{k,j} x^k y^k$$

wherein $c = 1/R$ and $r = (x^2 + y^2)^{1/2}$.

Among optical components included in the projector 100 which is a practical example of an image displaying apparatus according to an embodiment of the present invention, a part of ones which have not been described in the above-mentioned practical example will be described below.

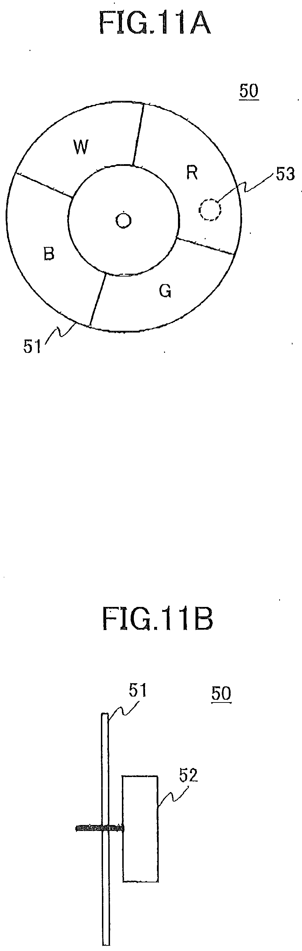

First, a color wheel 50 included in the projector 100 according to the present practical example will be described by using FIG. 11A and FIG. 11B. FIG. 11A is a schematic diagram of the color wheel 50 when viewed from a direction of the z-axis (a side of the light source 1). FIG. 11B is a schematic diagram of the color wheel 50 when viewed from a direction of the x-axis. As illustrated in FIG. 11A, the color wheel 50 is provided by dividing a disk 51 into plural areas like a circular graph and depositing different multilayer films onto respective areas to provide different colors. Although colors included in the color wheel 50 are basically red (R), green (G), and blue (B), white (W) may be added thereto as illustrated in FIG. 11A. White (W) is an area on which a multilayer film is not formed. Additionally, the reason why white (W) is provided on the color wheel 50 is for an increase in brightness thereof. Furthermore, yellow (Y), magenta (M), cyan (C), etc., for improving color reproducibility may be added to the color wheel 50.

The color wheel 50 is a color separation part for separating a necessary spectrum from light emitted from the light source 1. The disk 51 constituting the color wheel 50 is provided by providing respective color filters onto, for example, a glass with a diameter of about 40 mm and a thickness of about 1 mm. Respective color areas are physically separated.

Furthermore, the color wheel 50 is configured to rotate at a high speed, wherein a rotation axis of a motor 52 is coupled to a rotation center of the disk 51 as illustrated in FIG. 11B. A rotational speed thereof is generally several thousands rpm (round per minute) to ten thousand rpm. The color wheel 50 is provided with a sensor which is not illustrated in the figures, which includes a configuration capable of sensing positional information of respective colors. Such a sensor is synchronized with a rotation control of the color wheel 50 whereby it is possible to form a display image.

Hence, the color wheel 50 produces each color in a manner of time division (field sequential manner). A response speed of a micro-mirror included in the DMD 7 is a high speed, and hence, a problem does not occur even when a color image is formed by a field sequential manner. Furthermore, (a spot of) midway light to be condensed by a lamp cover is configured to be provided at an identical position constantly. A reference numeral 53 in FIG. 11A denotes a light spot as described above.

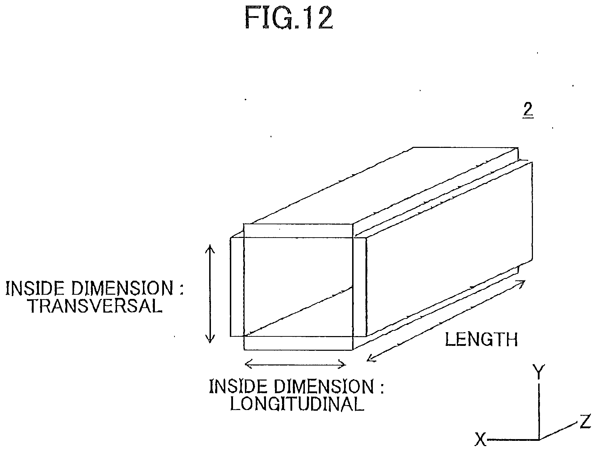

Next, the light mixing element 2 which is an illumination homogenizing element will be described. FIG. 12 is a perspective view illustrating the light mixing element 2 schematically. As already mentioned, the light mixing element 2 is formed by bonding four plate-shaped mirrors in such a manner that mirror surfaces face inside. Respective mirrors constituting the light mixing element 2 are bonded by using an adhesive excellent in a heat resistance thereof, etc. When the light mixing element 2 is long, the number of reflections at inner surfaces thereof increases whereby it is possible to homogenize an incident light distribution. However, when the light mixing element is long, a full length of an illumination optical system is large and influences a size of a housing of the projector 100. Hence, a relation between a degree of homogenization and a size of an illumination optical system is a trade-off. A length of the light mixing element 2 according to the present practical example is 20 mm to 30 mm, wherein 25 mm is optimal.

For example, a diagonal size of the DMD 7 being 1.651 cm (0.65 inches) and a pitch of pixels P being 10.8 $\mu$m are adopted. Then, an internal dimension of the light mixing element 2 is about 6 mm $\times$ 3 mm. It is preferable for a reflectance of a mirror used in the light mixing element 2 to be 98% or greater (at a wavelength of 420 nm - 680 nm).

Furthermore, a mirror to be used for the light mixing element 2 is generally provided by film-forming a film of a metal such as Ag or Al on a glass surface by vapor deposition, etc. In such a case, a dielectric multilayer film may be applied instead of a metal film. A thickness of each plate constituting the light mixing element 2 is about 1 mm.

The light mixing element 2 may be, for example, a glass pillar, other than bonded mirror plates. In such a case, total reflection on inner surfaces of a glass pillar is used, and hence, it is unnecessary to manufacture a reflection film.

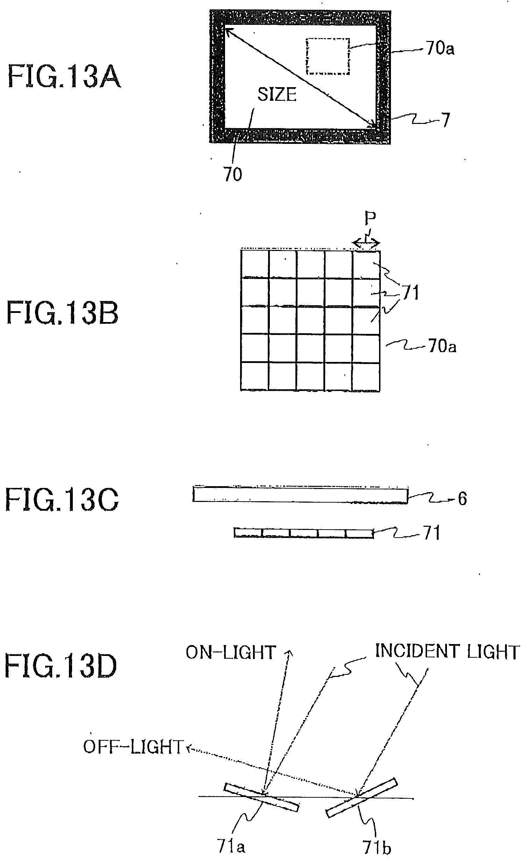

Next, the DMD 7 which is a reflection type image displaying element will be described. FIG. 13A, FIG. 13B, FIG. 13C, and FIG. 13D are diagrams illustrating the DMD 7 schematically. FIG. 13A, FIG. 13B, FIG. 13C, and FIG. 13D are a plan view of the DMD 7 when viewed from a top thereof, a partially enlarged view of an image displaying area of the DMD 7, a side view of the DMD 7, and a diagram illustrating a manner of reflection of image projection light in the DMD 7, respectively.

As illustrated in FIG. 13A, an outline of the DMD 7 is rectangular and an image displaying area 70 provided by arranging plural micro-mirrors is included therein. FIG. 13B illustrates an enlarge view of an area 70a which is a portion of the image displaying area 70.

When a part of image displaying area 70a is enlarged as illustrated in FIG. 13B, plural micro-mirrors 71 are arranged. The micro-mirrors 71 are square and one micro-mirror 71 corresponds to one pixel of an image to be displayed by projection light. A cycle of arrangement of the micro-mirrors 71 is referred to as a pitch of pixels P. The pitch of pixels P is, for example, about 10 $\mu$m. A size of a displayed projection image is determined by a diagonal length of the image displaying area 70.

For example, when a resolution of a projection image is XGA, the DMD 7 is used in which the micro-mirrors 71 corresponding to 1024 $\times$ 768 pixels (or picture elements) are arranged. Furthermore, when a resolution of a projection image is WXGA, the DMD 7 is used in which the micro-mirrors 71 corresponding to 1280 $\times$ 768 pixels (picture elements) are arranged. Additionally, XGA is an abbreviation of "Extended Graphic Array". Also, WXGA is an abbreviation of "Wide XGA". Thus, the DMD 7 controls an inclination angle of each micro-mirror 71 to control "ON" or "OFF" for each pixel, whereby projection light (projection image light) necessary to form an image to be displayed by the screen 20 is produced.

Although FIG. 13B is illustrated in such a manner that the micro-mirrors 71 are arranged without space, an actual size of the micro-mirror is slightly smaller than the pitch of pixels P. An actual size of the mirror to the pitch of pixels P is referred to as an "aperture ratio". It is possible for each micro-mirror 71 to rotate around a diagonal line thereof as a rotation axis. A direction of rotation of the micro-mirror 71 is provided such that a clockwise direction and counterclockwise direction with respect to the rotation axis are plus and minus, respectively. Furthermore, a rotational angle is $\pm$10° to $\pm$12°.

As illustrated in FIG. 13C, a protecting glass 6 is arranged on a top face of the DMD 7. Such a protecting glass 6 is to prevent dust, etc., from adhering to a surface of the micro-mirror 71.

As illustrated in FIG. 13D, it is possible for the micro-mirror 71 to rotate around a diagonal line as a rotation axis in a clockwise direction or a counterclockwise direction. A micro-mirror 71a illustrated in FIG. 13D rotates in a clockwise direction so that reflected light is "ON-light" and is directed toward an entrance pupil of a projection lens which is not illustrated in the figures. A micro-mirror 71b rotates in a counterclockwise direction so that reflected light is "OFF-light" and is not directed toward an entrance pupil of a projection lens which is not illustrated in the figures but is directed toward an absorption member.

Light reflected on a condition that the micro-mirror 71 included in the DMD 7 rotates by +12° is referred to as "ON-light". ON-light is configured to contribute to image information. Light reflected in a case where the micro-mirror 71 rotates by -12° is referred to as "OFF-light". OFF-light is configured not to contribute to image information but to provide a black display. ON-light reflected from the micro-mirror 71 of the DMD 7 enters an entrance pupil of a projection lens, is folded by the first projection mirror 11, and reflected by the second projection mirror 12 toward the screen 20. On the other hand, OFF-light does not enter an entrance pupil of a projection lens but arrives at an absorption member for treating OFF-light (which is not illustrated in the figures) provided near the DMD 7. Thus, rotation of the micro-mirror of the DMD 7 is controlled whereby it is possible to project projection light necessary for a display image through a projection optical system onto the screen 20.

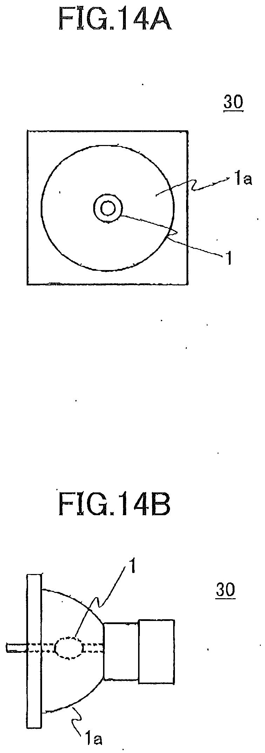

Next, the light source 1 and a lamp reflector 1a will be described. FIG. 14A and FIG. 14B illustrate the light source 1 and the lamp reflector 1a schematically. FIG. 14A is an elevation view of a lamp housing 30 composed of the light source 1 and the lamp reflector 1a. Also, FIG. 14B is a side view of the lamp housing 30.

It is preferable for the light source 1 to be a high pressure mercury lamp with a tube shape. Also, a halogen lamp is acceptable. The lamp reflector 1a is an ellipsoid, wherein the light source 1 is placed at one of two focal points of an ellipse and an entrance end of the light mixing element 2 is placed at the other focal point. For a power of the light source 1, for example, about 180 watts (W) - 260 W is used. When a power of the light source 1 is high, it is possible to display a bright image.

When a mercury lamp is used for the light source 1, an explosion-proof cover which is not illustrated in the figures is placed on a front face of the lamp reflector 1a so that even if the mercury lamp explodes, glass pieces do not scatter Inside. The explosion-proof cover is made of, for example, a borosilicate glass with a size of 40 mm square and a thickness of about 3 mm, and placed to incline by, for example, 10°, with respect to an optical axis of the light source 1. The reason why the explosion-proof cover is placed to incline with respect to an optical axis of the light source 1 is that light reflected from the explosion-proof cover is not returned light or focused at a position of the light source 1, and hence, if such returned light is provided, a lifetime of the light source 1 is shortened.

Furthermore, the explosion cover is provided with a multilayer film of infrared ray (IR) cut-off filter and ultraviolet (UV) ray cut-off filter. Moreover, the lamp reflector 1a is contained in a housing and the housing may be covered with a fine and metal mesh for explosion protection. The light source 1 is a consumable item in the projector 100, and hence, brightness thereof is reduced when an operating time is over several thousand hours. When replacement of the light source 1 is needed, the lamp housing 30 containing the light source 1 is replaced entirely.

The light source 1 emits light in a wide range from an ultraviolet ray through a visible ray to an infrared ray, but an ultraviolet ray and an infrared ray in emitted light are cut-off by the explosion-proof cover immediately after being emitted from the light source 1 and remaining light in a range of visible light is colored by the color wheel 50.

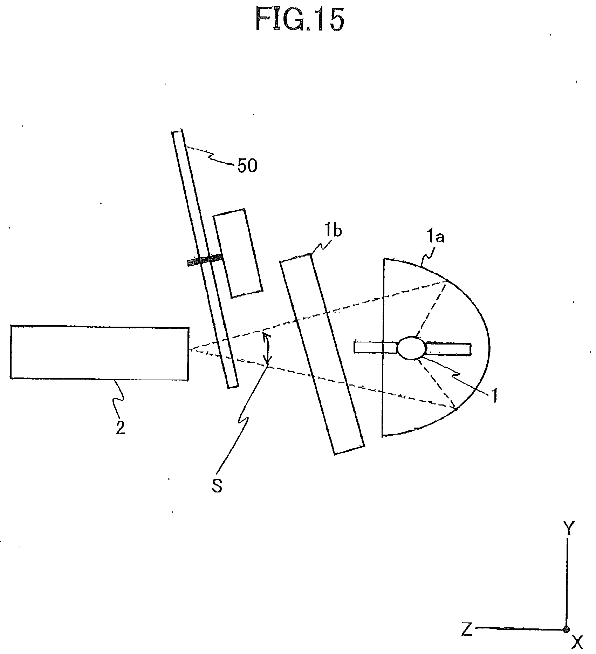

Next, a configuration of an essential part of an illumination optical system included in the projector 100 according to the present practical example will be further described by using FIG. 15. FIG. 15 illustrates arrangement of the light source 1 to the light mixing element 2. As already described, the lamp reflector 1a is an ellipsoid, wherein the light source 1 is placed at a position corresponding to a first focal point and an entrance end of the light mixing element 2 is placed at a position corresponding to a second focal point. An explosion cover 1b and the color wheel 50 are placed between the light source 1 and an entrance end of the light mixing element 2.

The explosion-proof cover 1b and the color wheel 50 are arranged to be tilted with respect to a Y-axis. Due to such tilt, it is possible to prevent light reflected from a front face or back face of the explosion-proof cover 1b or color wheel 50 from being returned light toward the light source 1. Tilts of the explosion-proof cover 1b and color wheel 50 are about a few degrees to 10°. Furthermore, an angle (illumination angle S) of light emitted from the light source 1 and condensed by the lamp reflector 1a is about 60°. Moreover, in FIG. 15, optical axes provided by the light source 1, the lamp reflector 1b, and the light mixing element 2 are consolidated in a direction of the Z-axis.

Although the embodiment(s) and specific example(s) of the present invention have been described with reference to the accompanying drawings, amendments and/or modifications may be made without departing from the scope of the claims. The invention is defined by the following claims.

Claims

1. An image displaying apparatus (100) comprising:

an illumination optical system (1, 2, 3);
an image displaying element (7) configured to be illuminated by the illumination optical system (1, 2, 3);
a projection optical system (8) configured to project light from the image displaying element (7) onto a screen (20); and

a dust-proof member (9) provided between the screen (20) and the projection optical system (8), and configured to mitigate an irregularity in an illuminance distribution of light to be projected onto the screen (20); wherein the light to be projected onto the screen (20) is reflected from the image displaying element (7) and passes through the dust-proof member (9); **characterised in that**:

the dust-proof member (9) is a flat plate glass and is arranged to be parallel to the image displaying element (7);
the dust-proof member (9) is a hardened glass.

2. The image displaying apparatus (100) according to claim 1, wherein the projection optical system (8) includes a projection lens (10) composed of plural lenses and a mirror (12) configured to reflect light reflected from the image displaying element through the projection lens (10) toward the screen (20).

3. The image displaying apparatus (100) according to claim 1 or 2, wherein the dust-proof member (9) includes an anti-reflection coating.

4. The image displaying apparatus (100) according to claim 3, wherein the anti-reflection coating has a transmittance of 98% or greater at an incident angle of 45 degrees and a transmittance of 80% or greater at an incident angle of 70 degrees.

5. The image displaying apparatus (100) according to any one of claims 1 to 4, wherein the illumination optical system (1, 2, 3) includes a light source (1), a condenser (3) configured to condense light emitted from the light source, an illumination homogenizing element (2) having an entrance end at a side of the condenser, and plural relay lenses (3), a first folding mirror (4) and a second folding mirror (5) arranged between an exit end of the illumination homogenizing element and the image displaying element (7).

6. The image displaying apparatus (100) according to any one of claims 1 to 5, wherein the image displaying element (7) is a reflection type image displaying element having plural micro-mirrors arranged two-dimensionally and configured to change an inclination angle of each micro-mirror between an on-state and an off-state to turn on or off reflection of light.

7. The image displaying apparatus (100) according to any one of claims 1 to 5, wherein the image displaying element (7) is an image displaying element (7) having pixels arranged two-dimensionally and configured to switch a liquid crystal to turn on or off

8. The image displaying apparatus (100) according to any one of claims 1 to 7, wherein a shape of the second folding mirror included in the projection optical system (8) is a free-form.

**Patentansprüche**

1. Bildanzeigevorrichtung (100), die Folgendes umfasst:

ein optisches Beleuchtungssystem (1, 2, 3);
ein Bildanzeigeelement (7), das konfiguriert ist, durch das optische Beleuchtungssystem (1, 2, 3) beleuchtet zu werden;
ein optisches Projektionssystem (8), das konfiguriert ist, Licht von dem Bildanzeigeelement (7) auf einen Bildschirm (20) zu projizieren; und
ein staubdichtes Element (9), das zwischen dem Bildschirm (20) und dem optischen Projektionssystem (8) vorgesehen ist und konfiguriert ist, eine Irregularität einer Beleuchtungsverteilung von Licht, das auf den Bildschirm (20) zu projizieren ist, abzuschwächen;
wobei das auf den Bildschirm (20) zu projizierende Licht von dem Bildanzeigeelement (7) reflektiert wird und sich durch das staubdichte Element (9) hindurchbewegt; **dadurch gekennzeichnet, dass**:

das staubdichte Element (9) eine Flachglasscheibe ist und ausgelegt ist, zu dem Bildanzeigeelement (7) parallel zu sein;
das staubdichte Element (9) gehärtetes Glas ist.

**2.** Bildanzeigevorrichtung (100) nach Anspruch 1, wobei das optische Projektionssystem (8) eine Projektionslinse (10), die aus mehreren Linsen besteht, und einen Spiegel (12), der konfiguriert ist, von dem Bildanzeigeelement reflektiertes Licht durch die Projektionslinse (10) in Richtung des Bildschirms (20) zu reflektieren, enthält.

**3.** Bildanzeigevorrichtung (100) nach Anspruch 1 oder 2, wobei das staubdichte Element (9) eine Antireflexionsbeschichtung enthält.

**4.** Bildanzeigevorrichtung (100) nach Anspruch 3, wobei die Antireflexionsbeschichtung eine Durchlässigkeit von 98 % oder mehr bei einem Einfallswinkel von 45 Grad und eine Durchlässigkeit von 80 % oder mehr bei einem Einfallswinkel von 70 Grad besitzt.

**5.** Bildanzeigevorrichtung (100) nach einem der Ansprüche 1 bis 4, wobei das optische Beleuchtungssystem (1, 2, 3) eine Lichtquelle (1), eine Feldlinse (3), die konfiguriert ist, von der Lichtquelle ausgesendetes Licht zu konzentrieren, ein Beleuchtungshomogenisierungselement (2) mit einem Eingangsende an einer Seite der Feldlinse und mehreren Relais-Linsen (3), einen ersten Klappspiegel (4) und einen zweiten Klappspiegel (5), die zwischen einem Ausgangsende des Beleuchtungshomogenisierungselements und dem Bildanzeigeelement (7) angeordnet sind, enthält.

**6.** Bildanzeigevorrichtung (100) nach einem der Ansprüche 1 bis 5, wobei das Bildanzeigeelement (7) ein Bildanzeigeelement des Reflexionstyps mit mehreren Mikrospiegeln, die zweidimensional angeordnet sind, ist und konfiguriert ist, einen Neigungswinkel jedes Mikrospiegels zwischen einem Ein-Zustand und einem Aus-Zustand zu ändern, um eine Reflexion des Lichts ein- oder auszuschalten.

**7.** Bildanzeigevorrichtung (100) nach einem der Ansprüche 1 bis 5, wobei das Bildanzeigeelement (7) ein Bildanzeigeelement (7) mit Pixeln, die zweidimensional angeordnet sind, ist und konfiguriert ist, einen Flüssigkristall ein- oder auszuschalten.

**8.** Bildanzeigevorrichtung (100) nach einem der Ansprüche 1 bis 7, wobei eine Form des zweiten Klappspiegels, der in dem optischen Projektionssystem (8) enthalten ist, eine Freiform ist.

**Revendications**

**1.** Appareil d'affichage d'image (100) comprenant :

un système optique d'éclairage (1, 2, 3) ;
un élément d'affichage d'image (7) conçu pour être éclairé par le système optique d'éclairage (1, 2, 3) ;
un système optique de projection (8) conçu pour projeter la lumière depuis l'élément d'affichage d'image (7) sur un écran (20) ; et
un élément anti-poussière (9) disposé entre l'écran (20) et le système optique de projection (8), et conçu pour réduire une irrégularité dans une répartition d'éclairement de la lumière devant être projetée sur l'écran (20) ;
la lumière devant être projetée sur l'écran (20) étant réfléchie depuis l'élément d'affichage d'image (7) et passant par l'élément anti-poussière (9) ;
**caractérisé en ce que** :

l'élément anti-poussière (9) est un verre de plaque plate et est conçu pour être parallèle à l'élément d'affichage d'image (7) ;
l'élément anti-poussière (9) est un verre durci.

**2.** Appareil d'affichage d'image (100) selon la revendication 1, dans lequel le système optique de projection (8) comprend une lentille de projection (10) composée de plusieurs lentilles et un miroir (12) conçu pour réfléchir la lumière réfléchie depuis l'élément d'affichage d'image à travers la lentille de projection (10) vers l'écran (20).

**3.** Appareil d'affichage d'image (100) selon la revendication 1 ou 2, dans lequel l'élément anti-poussière (9) comprend un revêtement anti-reflet.

**4.** Appareil d'affichage d'image (100) selon la revendication 3, dans lequel le revêtement anti-reflet présente une transmittance de 98 % ou plus à un angle d'incidence de 45 degrés et une transmittance de 80 % ou plus à un angle d'incidence de 70 degrés.

**5.** Appareil d'affichage d'image (100) selon l'une quelconque des revendications 1 à 4, dans lequel le système optique d'éclairage (1, 2, 3) comprend une source de lumière (1), un condensateur (3) conçu pour condenser la lumière émise depuis la source lumineuse, un élément d'homogénéisation de l'éclairage (2) présentant une extrémité d'entrée sur un côté du condensateur, et plusieurs lentilles de relais (3), un premier miroir pliant (4) et un deuxième miroir pliant (5) disposés entre une extrémité de sortie de l'élément d'homogénéisation de l'éclairage et l'élément d'affichage d'image (7).

**6.** Appareil d'affichage d'image (100) selon l'une quelconque des revendications 1 à 5, dans lequel l'élément d'affichage d'image (7) est un élément d'affichage d'image de type réfléchissant comportant plusieurs micromiroirs disposés de manière bidimensionnelle et conçus pour modifier un angle d'inclinaison de chaque micromiroir entre un état actif et un état désactivé pour activer ou désactiver la réflexion de la lumière.

**7.** Appareil d'affichage d'image (100) selon l'une quelconque des revendications 1 à 5, dans lequel l'élément d'affichage d'image (7) est un élément d'affichage d'image (7) présentant des pixels disposés de manière bidimensionnelle et conçus pour commuter un cristal liquide pour l'activation ou la désactivation.

**8.** Appareil d'affichage d'image (100) selon l'une quelconque des revendications 1 à 7, dans lequel une forme du deuxième miroir pliant compris dans le système optique de projection (8) est une forme libre.

# FIG.1

FIG.2

# FIG.3

CEILING (UPPER) SIDE

FLOOR (LOWER) SIDE

EP 2 597 515 B1

# FIG.4

# FIG.5

# FIG.6

FIG.7

FIG.8A

FIG.8B

FIG.9

CEILING (UPPER) SIDE

FLOOR (LOWER) SIDE

EP 2 597 515 B1

# FIG.10A

CEILING (UPPER) SIDE

FLOOR (LOWER) SIDE

| | |
|---|---|
| ■ | 90%–95% |
| | 85%–90% |
| ■ | 80%–85% |
| ■ | 75%–80% |
| ■ | 70%–75% |
| ■ | 65%–70% |
| ■ | 60%–65% |
| ■ | 55%–60% |
| | 50%–55% |
| ■ | 45%–50% |
| ■ | 40%–45% |
| ■ | 35%–40% |
| ■ | 30%–35% |
| ■ | 25%–30% |
| ■ | 20%–25% |
| | 15%–20% |
| | 10%–15% |
| ■ | 5%–10% |
| ■ | 0%–5% |

EP 2 597 515 B1

FIG.10B

EP 2 597 515 B1

# FIG.11A

# FIG.11B

# FIG.12

INSIDE DIMENSION :
TRANSVERSAL

INSIDE DIMENSION :
LONGITUDINAL

LENGTH

2

Y

Z

X

**FIG.13A**

**FIG.13B**

**FIG.13C**

**FIG.13D**

# FIG.14A

# FIG.14B

# FIG.15

# FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4329863 B
- JP 3727543 B
- JP 2009157223 A
- JP 2009145672 A
- JP 4210314 B
- JP 4467609 B
- EP 1806612 A1
- US 2009168031 A1
- EP 2560393 A1
- EP 2587310 A2